(19) Europäisches Patentamt
European Patent Office
Office européen des brevets

(11) EP 2 893 586 B1

(12) **EUROPÄISCHE PATENTSCHRIFT**

(45) Veröffentlichungstag und Bekanntmachung des Hinweises auf die Patenterteilung:
**05.06.2019 Patentblatt 2019/23**

(21) Anmeldenummer: **13753648.8**

(22) Anmeldetag: **29.08.2013**

(51) Int Cl.:
***H01M 8/14*** *(2006.01)* ***H01M 8/18*** *(2006.01)*
***H01M 8/20*** *(2006.01)* ***H01M 4/86*** *(2006.01)*
***H01M 4/96*** *(2006.01)* ***C25B 15/02*** *(2006.01)*
***C25B 9/08*** *(2006.01)* ***C25B 15/08*** *(2006.01)*

(86) Internationale Anmeldenummer:
**PCT/EP2013/067954**

(87) Internationale Veröffentlichungsnummer:
**WO 2014/033238 (06.03.2014 Gazette 2014/10)**

(54) **ELEKTROCHEMISCHE ZELLE VOM DURCHFLUSSTYP**

FLOW-TYPE ELECTROCHEMICAL CELL

CELLULE ÉLECTROCHIMIQUE DU TYPE À CIRCULATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.09.2012 DE 102012017306**

(43) Veröffentlichungstag der Anmeldung:
**15.07.2015 Patentblatt 2015/29**

(73) Patentinhaber: **thyssenkrupp Industrial Solutions AG**
**45143 Essen (DE)**

(72) Erfinder:
- **POLCYN, Gregor Damian**
**44227 Dortmund (DE)**
- **BREDEMEYER, Niels**
**45731 Waltrop (DE)**
- **ROOSEN, Christoph**
**52146 Würselen (DE)**
- **DONST, Dmitri**
**50859 Köln (DE)**
- **TOROS, Peter**
**45326 Essen (DE)**
- **WOLTERING, Peter**
**48485 Neuenkirchen (DE)**
- **HOORMANN, Dirk**
**59368 Werne an der Lippe (DE)**
- **HOFMANN, Philipp**
**1180 Wien (AT)**
- **KÖBERLE, Stephan**
**01936 Königsbrück (DE)**
- **FUNCK, Frank**
**58730 Fröndenberg/Ruhr (DE)**
- **STOLP, Wolfram**
**59071 Hamm (DE)**
- **LANGANKE, Bernd**
**59439 Holzwickede (DE)**

(74) Vertreter: **thyssenkrupp Intellectual Property GmbH**
**ThyssenKrupp Allee 1**
**45143 Essen (DE)**

(56) Entgegenhaltungen:
**WO-A1-2012/022532**
**US-A- 4 049 880**
**US-A- 4 193 860**
**US-A- 4 224 129**
**US-A- 4 652 355**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 893 586 B1

## Beschreibung

### Gebiet der Erfindung

Die Erfindung betrifft einen speziellen Zellaufbau für elektrochemische Zellen vom Durchflusstyp, der im Vergleich zu einem konventionellen Zellaufbau einen minimierten Druckverlust aufweist und des Weiteren eine deutlich verbesserte Strömungsverteilung innerhalb der Zelle zeigt. Außerdem wird mit der elektrochemischen Zelle eine bessere Leistung erzielt als mit Zellen, die einen herkömmlichen Zellaufbau aufweisen.

### Stand der Technik

Insbesondere im Zusammenhang mit der sich wandelnden Energieerzeugung gewinnen Energiespeicher zunehmend an Bedeutung. Von besonderem Interesse sind solche Beispiele, die die Möglichkeit bieten, große Mengen Energie zu speichern und diese mit hoher Leistung abgeben und aufnehmen zu können. Bevorzugt sind dabei Technologien, die die Energie mit einem möglichst hohen Wirkungsgrad ein- und wieder ausspeichern, damit möglichst wenig Energie verloren geht und somit eine kostengünstige Zwischenspeicherung erfolgen kann.

Eine dafür vielfach diskutierte Technologie sind die Redox-Flow-Speicher. Eine allgemeine Darstellung dieser Technologie aus dem Stand der Technik ist in **Abbildung 1** gezeigt. Bei einem Redox-Flow-Speicher ist die Energie in den Elektrolyten in Form von Metallen, Salzen oder anderen chemischen Verbindungen gespeichert, wobei diese Verbindungen in flüssiger, dispergierter oder gelöster Form vorliegen. Die Elektrolyte werden in externen Tanks **1a, 1b** gelagert. Zum Laden oder Entladen werden die Elektrolyte durch eine elektrochemische Zelle **2** gepumpt. In der elektrochemischen Zelle **2** wird durch Anlegen einer Spannung über einen Netzanschluss **5** an den jeweiligen Elektroden **3a, 3b** durch Oxidations- und Reduktionsreaktionen beim Laden elektrische Energie in chemische Energie umgewandelt und beim Entladen wieder in elektrische Energie zurück umgewandelt. An den Elektroden laufen verallgemeinert die nachstehenden Reaktionen ab:

Minus-Pol:

$$A^{n} \underset{\text{laden}}{\overset{\text{entladen}}{\rightleftharpoons}} A^{n+x} + x\ e^{-}$$

Plus-Pol:

$$C^{n} + y\ e^{-} \underset{\text{laden}}{\overset{\text{entladen}}{\rightleftharpoons}} C^{n-y}$$

Die elektrochemische Zelle **2** besteht aus zwei Halbzellen, der Anodenseite und der Kathodenseite, in denen die jeweiligen Elektroden **3a, 3b** enthalten sind. Beide Halbzellen sind durch eine permeable Trennschicht **4** zum Ladungsausgleich beim Laden und Entladen voneinander getrennt. Zur Leistungserhöhung können z. B. mehrere solcher Einzelzellen zu so genannten Stacks oder Zellenstapel zusammengefasst werden oder die aktive Fläche der einzelnen Zellen kann erhöht werden.

Die Leistungsfähigkeit einer einzelnen Zelle mit vorgegebener aktiver Fläche wird bestimmt aus der Kombination von Zellspannung und Stromdichte, also der maximalen Leistung pro Fläche. Dies gilt für beide Richtungen der reversibel stattfindenden Reaktion.

Zum Erreichen einer möglichst hohen Leistungsdichte pro Zelle werden Elektroden mit einer möglichst hohen Oberfläche benötigt. Die Leistung einer Zelle ist u. a. von der Anzahl der elektrochemischen Reaktionen pro Zeit und der geometrischen Zellfläche bestimmt [$mol/(s*m^2)$]. Elektroden mit einer großen Oberfläche pro geometrischer Oberfläche haben somit viele aktive Zentren, an denen die elektrochemischen Reaktionen ablaufen können. Hierfür werden nach dem Stand der Technik dreidimensionale poröse Elektroden, wie zum Beispiel Metallschäume oder hochporöse Kohlenstoffvliese, eingesetzt, aber auch andere Materialien sind möglich. Der Begriff "Elektrode" wird in dieser Anmeldung mit dem Begriff "dreidimensionale poröse Elektrode" gleichgesetzt.

**Abbildung 2** zeigt einen Standardaufbau einer derartigen Redox-Flow-Zelle aus dem Stand der Technik. Diese Elektrode **6a, 6b** werden zusammen mit einer permeablen Trennschicht **4** in einen Zellrahmen integriert und beim Laden und Entladen jeweils von dem Anolyten **8a** bzw. Katholyten **8b** in X- oder Y-Richtung durchströmt, so dass an der

Oberfläche der Elektroden **6a, 6b** die Oxidations- oder Reduktionsreaktionen stattfinden. Die Elektroden **6a, 6b** werden dabei von Seitenelementen **7** nach außen abgegrenzt. Die Seitenelemente haben neben einer Abgrenzung nach außen in einem Zellstack die Aufgabe den Strom von einer Zelle in die nächste weiterzuleiten.

Bei einer Durchströmung in X- oder Y-Richtung nimmt der State-of-Charge (SOC, Ladungszustand) des Elektrolyten in der gleichen Richtung beim Entladen ab bzw. beim Laden zu, so dass die Elektrode, das Seitenelement und die permeable Trennschicht an der gesamten Oberfläche eine unterschiedliche Konzentration der jeweiligen aktiven Spezies sieht. Wird nun pro Verweilzeit des Elektrolyten in der Zelle eine zu große Änderung des SOC erreicht, so werden einerseits die einzelnen Komponenten, wie z. B. die permeable Trennschicht, die Elektrode und das Seitenelement, an unterschiedlichen Stellen unterschiedlich beansprucht, wodurch es leicht zu einer irreversiblen Schädigung der jeweiligen Komponenten kommen kann.

Des Weiteren wird beim Laden die Leistung der Zelle stets durch den Ort auf der Elektrode bestimmt, an dem der höchste SOC vorliegt, da ansonsten leicht Nebenreaktionen stattfinden können.

Umgekehrt ist beim Entladen die Leistungsfähigkeit der Zelle durch den Ort auf der Elektrode bestimmt, an dem die niedrigste SOC vorliegt.

Aus diesen Gründen ist es für eine Zelle mit einem solchen Zelldesign nötig, dass pro Verweilzeit des Elektrolyten in der Zelle nur eine sehr geringe Ladungsänderung stattfindet. Dies bedeutet, dass bei einer gegebenen Stromdichte der Elektrolyt mit einer relativ hohen Geschwindigkeit durch die Zelle gepumpt werden muss. Dies hat jedoch einen steigenden Druckverlust und damit steigende Pumpleistung zur Folge, was wiederum zu einer starken Verringerung des Systemwirkungsgrades führt.

Des Weiteren ist auch für eine gleichmäßige Durchströmung der Elektroden ein verhältnismäßig hoher Volumenstrom nötig.

Der gesamte Wirkungsgrad eines solchen Redox-Flow-Speichers wird, wie bereits oben erwähnt, neben den elektrochemischen Verlusten innerhalb der einzelnen Zellen insbesondere auch durch die Pumparbeit reduziert, die für die Förderung des Elektrolyten durch die Zellen benötigt wird. Die meiste Pumparbeit wird dabei für die Überwindung des Druckgradienten innerhalb der Zelle benötigt. Dieser Druckgradient wird einerseits durch die Anströmkanäle innerhalb der Zelle aber insbesondere auch von der Durchströmung der Elektroden hervorgerufen.

Zur Reduzierung der Pumparbeit bei einer ebenso gleichmäßigen Strömungsverteilung des Elektrolyten innerhalb der Zelle werden verschiedene Ansätze vorgeschlagen.

In der internationalen Patentanmeldung WO 2012 022532 A1 (Cellstrom) wird zur Verbesserung der strömungsbedingten Druckverluste und für eine gleichmäßige Durchströmung der Elektrode eine Optimierung des Verteilkanals beschrieben.

Auch in der Europäischen Patentanmeldung EP 0814527 A2 (Sumitomo) wird die Verbesserung der Verteilkanäle in die Zelle beschrieben und auf das optimale Verhältnis zwischen Zellhöhe und Zellbreite eingegangen. Es wird ausgeführt, dass insbesondere eine Vergrößerung der Zellenhöhe (Länge der Zelle in Fließrichtung) zu einer Verringerung des Wirkungsgrades des Gesamtsystems aufgrund steigender Pumpleistung führen würde. Weiterhin wird beschrieben, dass eine Verbreiterung der Zelle zur Leistungserhöhung zu einer ungleichmäßigen Elektrolytdurchströmung führen kann.

In der US-Patentschrift US 5,648,184 (Toyo) wird zur Reduktion des Druckverlustes vorgeschlagen, die eingesetzten Elektroden mit einer Nut zu versehen, die mit der Strömung des Elektrolyten ausgerichtet ist. Dadurch soll es zu einer Verminderung des Druckverlustes kommen ohne die Elektrodenleistung zu beeinflussen.

In der US-Patentschrift US 6,475,661 B1 (Chemieco) wird unter anderem vorgeschlagen, dass durch die Aufbringung von Strömungsprofilen auf der Bipolarplatte der Druckverlust reduziert werden kann.

Gegenstand der Deutschen Offenlegungsschrift DE 3401638 A1 (Hoechst) sind Elektrolysezellen mit flüssigen Elektrolyten und porösen Elektroden, bei denen der Elektrolyt parallel zur Elektrodenfläche eintritt und durch mindestens eine Drosselstelle gezwungen wird, wenigstens teilweise parallel zum Ladungsfluss durch die Elektrode zu fließen.

Von *Aaron et al.* wird beschrieben, dass durch einen sogenannter "Flow-by"-Zellen-aufbau sehr gute elektrochemische Ergebnisse erzielt werden können. Für diese Ver suche wurde eine modifizierte Methanol Brennstoffzelle als Redox-Flow-Zelle verwendet. Diese "Flow-by"-Technologie erlaubt durch ein geeignetes Design der Strömungskanäle eine Reduktion des Druckverlustes, allerdings hat das Design der Strömungskanäle auch stets erheblichen Einfluss auf die Leistung der Zelle. Bereits die Autoren geben zu bedenken, dass die serpentinenartigen Fließkanäle zwar zu einer guten elektrochemischen Leistung führen, dies aber auch mit einem hohen Druckverlust verbunden sein kann. Des Weiteren birgt ein solches Konzept die Gefahr, dass bei angestrebten hohen Stromdichten die Diffusion in das verwendete Kohlenstoffvlies limitierend wirkt **[**J. Power Sour. 206 (2012) 450- 453**].**

*Tian et al.* beschreiben die Aufbringung von unterschiedlichen Fliesskanälen innerhalb der Elektroden. Es wurde gezeigt, dass dies zu einer erheblichen Reduzierung des Druckverlustes führen kann. Es ist allerdings eine sehr ungleichmäßige Elektrolytverteilung innerhalb der Zelle zu erkennen, was zu einer Reduzierung der Leistungsfähigkeit der einzelnen Zelle führt und aufgrund unterschiedlicher Strömungsregime leicht zu Nebenreaktionen wie z. B. Sauerstoff- oder Wasserstoffentwicklung führen kann **[**Rare Metals 30 (Spec. Issue) (Mar. 2012) 16-21**].**

Nach dem Stand der Technik werden Redox-Flow-Zellen von einer Seite der Elektroden angeströmt und der Elektrolyt durchströmt in X- oder Y-Richtung die Elektroden (siehe **Abbildung 2)** und verlässt auf der gegenüberliegenden Seite wieder die Zelle. Da die verwendeten Elektroden einen hohen Strömungswiderstand für den Elektrolyten verursachen, treten dadurch unvermeidlich Druckverluste auf, die ein Up-scaling der Zelle gleichzeitig in X- und Y-Richtung technisch und ökonomisch sehr schwierig bis unmöglich machen. Ein solch hoher Druckverlust in großen Zellen würde einerseits technisch aufwendige und teure Konzepte benötigen und andererseits auch ein Sicherheitsrisiko darstellen. Des Weiteren würde zur Überwindung des Druckverlustes eine Pumpleistung benötigt werden, die den gesamten Systemwirkungsgrad in einem nicht vertretbaren Ausmaß reduzieren würde.

Die Veröffentlichung US 4,049,880 A beschreibt ein System für eine Metallhalogenid-Sekundär-Batterie, in der aus sich selbst heraus ein ausreichender Druck zur Verflüssigung des während des Ladens erzeugten Halogens entwickelt werden kann.

Aufgabe der vorliegenden Erfindung war es demnach, die aus dem Stand der Technik bekannten Nachteile zuverlässig zu vermeiden und eine alternative Lösung für eine elektrochemische Zelle vom Durchflusstyp zur Verfügung zu stellen, mittels der der Druckverlust innerhalb der Zelle reduziert, die Stromdichte gesteigert und eine gleichmäßigere Durchströmung der Elektrode gewährleistet wird.

Außerdem sollte der Elektrolyt über die Höhe und gleichzeitig über die Breite der Zelle einen möglichst gleichmäßigen Ladungszustand aufweisen, um die Wahrscheinlichkeit von unerwünschten Nebenreaktionen zu vermindern. Zudem war es Aufgabe der vorliegenden Erfindung einen Zellenstapel enthaltend die erfindungsgemäße elektrochemische Zelle vom Durchflusstyp und ein Verfahren zum Betreiben einer solchen Zelle zur Verfügung zu stellen.

## Beschreibung der Erfindung

Gegenstand der Erfindung ist eine elektrochemische Zelle vom Durchflusstyp, umfassend

(a) eine Anoden- und eine Kathodenhalbzelle, die von Seitenelementen begrenzt werden, und die in den Halbzellen die jeweiligen porösen Elektroden enthalten sind, sowie
(b) eine permeable Trennschicht, die zwischen der Anoden- und der Kathodenhalbzelle angeordnet ist,
die sich dadurch auszeichnet, dass

(i) ein Elektrolyteinströmbereich, der mit einem Elektrolytzulauf verbunden ist und ein Elektrolytausströmbereich, der mit einem Elektrolytablauf verbunden ist, vorgesehen ist, wobei

(ii) Elektrolyteinströmbereich und Elektrolytausströmbereich auf gegenüberliegenden Seiten der porösen Elektrode angeordnet sind, so dass

(iii) einströmender Elektrolyt die poröse Elektrode senkrecht zur permeablen Trennschicht durchströmt, wobei im Elektrolyteinströmbereich eine grobmaschige Stützstruktur vorgesehen ist, welche einen geringeren Strömungswiderstand bietet, als die poröse Elektrode.

Überraschenderweise wurde gefunden, dass bei Durchströmung der Elektrode in horizontaler Richtung, d.h. in z-Richtung bezogen auf **Abbildung 3** der Druckverlust um ein vielfaches kleiner ist und die Zelle somit mit größeren Abmessungen ausgelegt werden kann.

Durch den neuen vorteilhaften Aufbau der Zelle wird zudem vermieden, dass der Elektrolyt über die Höhe und Breite der Zelle mit einem stark unterschiedlichen Ladungszustand vorliegt. Dies hat zur Folge, dass die Wahrscheinlichkeit für Nebenreaktionen über die gesamte Fläche der Zelle die gleiche ist und dadurch die maximale Änderung des SOC des Elektrolyten pro Verweilzeit in der Zelle erreicht werden kann und auch bei deutlich höheren Stromdichten gearbeitet werden kann, wodurch ein geringerer Volumenstrom nötig ist, somit weniger Pumpleistung und damit ein höherer Systemwirkungsgrad erzielt werden kann.

Die erfindungsgemäße elektrochemische Zelle vom Durchflusstyp kann sowohl von Flüssigkeiten oder von Gasen oder auch von beiden durchströmt werden. Typischerweise werden dabei als Lösungsmittel anorganische oder organische Säuren verwendet, wobei bevorzugt wässrige Schwefelsäure zum Einsatz kommt. Als mögliche Redoxpaare werden Titan, Eisen, Chrom, Vanadium, Cer, Zink, Brom und Schwefel eingesetzt. Es ist aber auch möglich die erfindungsgemäße Zelle als Zink-Luft-Energiespeicher zu verwenden, so dass die Zelle von einem Zink-Slurry und Luft bzw. Sauerstoff durchströmt wird. Auch andere derartige Anwendungen sind denkbar, in denen ein Salz gelöst in einer Flüssigkeit in einer elektrochemischen Zelle elektrochemisch umgesetzt wird und dabei die Entstehung eines Gases nicht die Hauptreaktion darstellt.

Bei der erfindungsgemäßen elektrochemischen Zelle kann es sich um eine Elektrolysezelle in Einzelzellenbauweise, den sogenannten "Single Cell Elements" handeln, wie sie beispielsweise in DE 196 41125 A1 (Uhdenora)

offenbart sind, oder um eine Bauart des Filterpressentyps, wie sie beispielhaft in EP 0095039 A1 (Uhde) beschrieben ist. Somit handelt es sich bei den Seitenelementen im Fall der Einzelzellenbauweise um Monopolarelemente und bei den elektrochemischen Zellen des Filterpressentyps um Bipolarelemente. Dabei werden die jeweiligen Seitenelemente bevorzugt als Platten und besonders bevorzugt ausgeführt als Bipolarplatten eingesetzt.

Die permeable Trennschicht wird ausgewählt aus der Gruppe umfassend permeable Membranen, selektiv permeable Membranen, semi-permeable Membranen, Diaphragmen, Ultrafiltrations-Membranen und keramischen Separatoren.

In vorteilhafter Ausführungsform sind der Elektrolyteinströmbereich zwischen der permeablen Trennschicht und der porösen Elektrode und der Elektrolytausströmbereich zwischen der permeablen Trennschicht und den Seitenelementen angeordnet oder umgekehrt.

In einer weiteren vorteilhaften Ausgestaltung der Erfindung sind der Elektrolyteinströmbereich und/oder der Elektrolytausströmbereich in die porösen Elektroden und/oder die Seitenelemente mittels eines oder mehreren Strömungskanälen integriert. Die Strömungskanäle können dabei parallel zueinander in der porösen Elektrode oder den Seitenelementen angeordnet sein oder sich kreuzen. Es ist jedwede Anordnung von Strömungskanälen denkbar.

In einer weiteren Ausführung der Erfindung ist im Elektrolytausströmbereich eine grobmaschige Stützstruktur vorgesehen. Die grobmaschige Stützstruktur im Elektrolyteinströmbereich und/oder im Elektrolytausströmbereich ist bevorzugt ein Gewebe oder ein Gestrick oder eine andere Komponente, die einen definierten Abstand zwischen permeablen Trennschicht und Elektrode gewährleisten und einen geringen Strömungswiderstand bietet. Dabei wird im Elektrolyteinströmbereich und im Elektrolytausströmbereich die gleiche Ausführungsart der grobmaschigen Stützstruktur oder eine andere grobmaschige Stützstruktur eingesetzt. Diese grobmaschige Stützstruktur wird auch als Perkolator bezeichnet.

Die grobmaschige Stützstruktur ist dabei aus einem elektrisch leitenden Material oder einem Material mit leitfähiger Beschichtung hergestellt, wobei es sich bevorzugt um eine Kohlenstoffstützstruktur handelt. Es können aber auch andere Materialien verwendet werden. Dabei weist die grobmaschige Stützstruktur einen geringeren Strömungswiderstand als die poröse Elektrode auf und ist stabil gegenüber den Elektrolyten.

Wichtig ist dabei, dass das Material ausreichend elektrisch mit der porösen Elektrode verbunden ist und auch eine gute elektrische Anbindung an die Seitenelemente aufweist. Dieses Gewebe kann eingespart werden, wenn die Seitenelemente und/oder die poröse Elektrode mit entsprechenden Strömungskanälen versehen wird, die ein ungehindertes Abfließen des Elektrolyten gewährleisten und eine ausreichende elektrische Verbindung mit der Elektrode herstellen.

An dieser Stützstruktur können bevorzugt, aber nicht zwangsweise, ebenfalls Redox-Reaktionen stattfinden.

Die poröse Elektrode ist vorteilhafterweise ein Kohlenstoffvlies, ein Schaum, oder ein Metallschaum. Auch andere Materialien können Verwendung finden.

Der Aufbau kann um weitere Schichten erweitert werden, die entweder zu einer gleichmäßigeren Elektrolytverteilung oder zu einer verbesserten Zellleistung, d.h. zu einer höheren Stromdichte, einem höheren Wirkungsgrad oder einer besseren bzw. gleichmäßigeren Stromverteilung oder ähnlichem führen oder sonstige Vorteile zeigen. Auch ist es möglich, dass sich die Kathoden- und Anodenhalbzelle einer einzelnen Zelle vom Aufbau unterscheiden oder der Aufbau der beiden Halbzellen symmetrisch ausgeführt ist.

Des Weiteren betrifft die vorliegende Erfindung Zellenstapel einer elektrochemischen Zelle vom Durchflusstyp wie sie eingangs beschrieben worden sind.

Schließlich umfasst die vorliegende Erfindung auch ein Verfahren zum Betreiben einer elektrochemischen Zelle vom Durchflusstyp, das sich dadurch auszeichnet, dass eine poröse Elektrode senkrecht zur permeablen Trennschicht mit Elektrolyt durchströmt wird.

Vorteilhafterweise wird das Verfahren derart realisiert, dass

(i) Elektrolyt über einen Elektrolyteinströmbereich, der mit einem Elektrolytzulauf verbunden ist, zugeführt,
(ii) die poröse Elektrode senkrecht zur permeablen Trennschicht durchströmt und
(iii) der Elektrolyt über einen Elektrolytausströmbereich, der auf der gegenüberliegenden Seite der porösen Elektrode zum Elektrolyteinströmbereich angeordnet ist, aus der Zelle geführt wird.

Der Stand der Technik und die vorliegende Erfindung wird anhand von verschiedenen Abbildungen näher dargestellt:

**Abbildung 1:** Schematische Darstellung eines Redox-Flow-Speichers aus dem Stand der Technik.

**Abbildung 2:** Schematischer Aufbau einer Redox-Flow-Zelle aus dem Stand der Technik.

**Abbildung 3:** Schematischer Aufbau einer erfindungsgemäßen elektrochemischen Zelle, bei der die porösen Elektroden senkrecht zur permeablen Trennschicht durchströmt werden.

**Abbildung 4:** Schematischer Aufbau einer weiteren erfindungsgemäßen elektrochemischen Zelle, bei der die porösen Elektroden senkrecht zur permeablen Trennschicht durchströmt werden.

**Abbildung 5:** Unterschiedliche Anordnungen der Bestandteile einer erfindungsgemäßen elektrochemischen Zelle.

**Abbildung 6:** Dreidimensionale Darstellung einer erfindungsgemäßen elektrochemischen Zelle, die die unterschiedlichen Anordnungen der Bestandteile, wie in den Fig. 5a, b, c gezeigt, beinhaltet.

In den **Abbildungen 3 und 4** sind erfindungsgemäße elektrochemische Zellen **9** dargestellt. Dabei fließt Elektrolyt **8a, 8b** über einen Elektrolytzulauf **13a, 13b** in einen Elektrolyteinströmbereich **10,** der zwischen permeabler Trennschicht **4** und poröser Elektrode **3a** angeordnet ist. In dem Elektrolyteinströmbereich **10** befindet sich eine grobmaschige Stützstruktur **11,** die auch als Perkolator bezeichnet wird. Der Elektrolyteinströmbereich **10** weist am Ende der elektrochemischen Zelle, das dem Elektrolytzulauf gegenüberliegt, ein geschlossenes Ende **12** auf. Dadurch wird einströmender Elektrolyt **8a, 8b** senkrecht zur permeablen Trennschicht **4,** d.h. in z-Richtung, durch die poröse Elektrode **3a, 3b** gezwungen. Bei einströmendem Elektrolyt **8a, 8b** in den mit einer Stützstruktur **11** gefüllten Elektrolyteinströmbereich **10** füllt sich dieser zunächst gleichmäßig mit Elektrolyt **8a, 8b.** Danach strömt der Elektrolyt **8a, 8b** gleichmäßig durch die poröse Elektrode **3a, 3b,** welche einen größeren Strömungswiderstand bietet als die Stützstruktur **11.** Von dort strömt der Elektrolyt **8a, 8b** in einen Elektrolytausströmbereich **14,** in dem eine weitere grobmaschige Stütz struktur **15** vorgesehen ist, die aus demselben oder einem anderen Material besteht, wie die Stützstruktur **11** im Elektrolyteinströmbereich **10.** Daraufhin verlässt der Elektrolyt **8a, 8b** die elektrochemische Zelle **9** durch einen Elektrolytablauf **16.**

**Abbildung 4** unterscheidet sich von **Abbildung 3** nur dadurch, dass der Elektrolytausströmbereich **14** in das Seitenelement **7** über Strömungskanäle **17** integriert ist. Auf die Stützstruktur kann dann verzichtet werden.

**Abbildung 5** zeigt unterschiedliche Anordnungen der Bestandteile in einer elektrochemischen Zelle, die senkrecht zur permeablen Trennschicht durchströmt wird. In **Abbildung 5a** ist die poröse Elektrode **6a, 6b** mit integrierten Strömkanälen **17** für den Einströmbereich **10,** als auch für den Ausströmbereich **14** gezeigt. In **Abbildung 5b** wird der Elektrolyteinströmbereich **10** über eine grobmaschige Stützstruktur **11** realisiert und die Strömungskanäle **17** sind in die poröse Elektrode **6a, 6b** eingearbeitet. In **Abbildung 5c** werden der Elektrolyteinströmbereich **10** und der Elektrolytausströmbereich **14** über Strömungskanäle **17** dargestellt. Dabei befinden sich die Strömungskanäle **17** des Elektrolyteinströmbereichs **10** in der porösen Elektrode **6a, 6b** und die Strömungskanäle des Elektrolytausströmbereichs **14** befinden sich in den Seitenelementen **7.** Die Form und Anordnung der Strömungskanäle kann hierbei beliebig gewählt werden.

In den **Abbildungen 6a, 6b und 6c** sind die in den **Abbildungen 5a, 5b und 5c** dargestellten Anordnungen von Bestandteilen einer elektrochemischen Zelle in dreidimensionaler Ansicht dargestellt. Im oberen Teil **18** der Abbildung wird die Sicht auf die Seite der elektrochemischen Zelle gezeigt, aus der Elektrolyt über einen Elektrolytablauf **16** ausgeführt wird und im unteren Bereich der Abbildung **19** wird die Sicht auf die Seite der elektrochemische Zelle gezeigt, aus der Elektrolyt über einen Elektrolytzulauf **13** in die Zelle einströmt.

Nachstehend soll die vorliegende Erfindung anhand eines Ausführungsbeispiels näher beschrieben werden.

**Beispiel**

Der Druckverlust in einer Zelle nach dem Stand der Technik mit einer aktiven Fläche von 1 $m^2$ mit den Abmessungen 1 m x 1 m kann wie folgt berechnet werden.

Für eine Entladung des Elektrolyten um 20 % pro Verweilzeit bei einer angenommenen Leistungsdichte von 500 $W/m^2$ kann angenommen werden, dass ein Elektrolytvolumenstrom von knapp 39 L/h benötigt wird. Wird ein Vlies als Elektrode verwendet, dass eine Dicke von 6 mm und eine Permeabilität von $1{,}6E^{-10}$ $m^2$ hat und dieses wie üblich um 25 % komprimiert wird (Permeabilität des komprimierten Vlieses $4{,}0E^{-11}$), so kann aus diesen Angaben der entstehende Druckverlust innerhalb der Zelle nach folgender Formel berechnet werden:

$$\text{Druckverlust} = \text{Volumenstrom}*\text{Viskosität}*\text{Länge}/(\text{Permeabilität}*\text{Querschnittsfläche})$$

Bei einer durchschnittlichen Viskosität des Elektrolyten von $1{,}0E^{-2}$ Pas lässt sich somit ein Druckverlust von ca. 0,6 MPa ermitteln.

Nach der erfindungsgemäß vorgeschlagenen Methode mit einer Durchströmung des Vlieses in Z-Richtung

würde sich bei ansonsten gleichen Bedingungen und unter Vernachlässigung der Druckverluste in den Ein- und Ausströmbereichen **10** und **14** der Druckverlust auf ca. $1{,}2 \cdot 10^{-5}$ MPa deutlich reduzieren. Das entspricht einem Verhältnis von etwa 50.000:1.

Vorteile, die sich aus der vorliegenden Erfindung ergeben:

Durch diesen Aufbau kann nicht nur der Druckverlust innerhalb der Zelle um ein vielfaches reduziert werden, auch kann dadurch vermieden werden, dass der Elektrolyt über die Höhe und Breite der Zelle mit einem stark unterschiedlichen Ladungszustand vorliegt. Dies hat zur Folge, dass die Wahrscheinlichkeit für Nebenreaktionen über die gesamte Fläche der Zelle die gleiche ist und dadurch die maximale Änderung des SOC des Elektrolyten pro Verweilzeit in der Zelle erreicht werden kann und auch bei deutlich höheren Stromdichten gearbeitet werden kann, wodurch ein geringerer Volumenstrom nötig ist, somit weniger Pumpleistung und damit ein höherer Systemwirkungsgrad erzielt werden kann.

Des Weiteren sehen die einzelnen Komponenten wie permeable Trennschicht, Elektrode und Seitenelement über die Höhe und Breite den gleichen Ladungszustand, was sich positiv auf Zellperformance und Haltbarkeit der Komponenten auswirkt.

Somit ist es möglich, elektrochemische Zellen mit Elektroden bestehend aus einem Vlies oder ähnlichem in einer größeren geometrischen Dimension als den bisherigen Stand der Technik herzustellen bzw. wirtschaftlich zu betreiben.

**Bezugszeichenliste**

| | |
|---|---|
| 1 | Tanks |
| 2 | elektrochemische Zelle |
| 3a, 3b | poröse Elektroden/ Vlies |
| 4 | permeable Trennschicht |
| 5 | Netzanschluss |
| 6a, 6b | Vlies / poröse Elektrode |
| 7 | Seitenelement |
| 8a | Anolyt |
| 8b | Katholyt |
| 9 | erfindungsgemäße elektrochemische Zelle |
| 10 | Elektrolyteinströmbereich |
| 11 | grobmaschige Stützstruktur/ Perkolator |
| 12 | geschlossenes Ende des Elektrolyteinströmbereichs |
| 13a, 13b | Elektrolytzulauf |
| 14 | Elektrolytausströmbereich |
| 15 | weitere Stützstruktur (Perkolator) |
| 16 | Elektrolytablauf |
| 17 | Strömungskanäle |
| 18 | oberer Bereich der Fig. 6 |
| 19 | unterer Bereich der Fig. 6 |

**Patentansprüche**

**1.** Elektrochemische Zelle (2) vom Durchflusstyp, umfassend

(a) eine Anoden- und eine Kathodenhalbzelle, die von Seitenelementen (7) begrenzt werden, wobei in den Halbzellen die jeweiligen porösen Elektroden (3a, 3b) enthalten sind, sowie
(b) eine permeable Trennschicht (4), die zwischen der Anoden- und der Kathodenhalbzelle angeordnet ist,
(c) ein Elektrolyteinströmbereich (10), der mit einem Elektrolytzulauf (13a, 13b) verbunden ist und ein Elektrolytausströmbereich (14), der mit einem Elektrolytablauf (16) verbunden ist, vorgesehen ist, wobei
(d) Elektrolyteinströmbereich und Elektrolytausströmbereich auf gegenüberliegenden Seiten der porösen Elektrode angeordnet sind, so dass
(e) einströmender Elektrolyt die poröse Elektrode senkrecht zur permeablen Trennschicht (4) durchströmt
**dadurch gekennzeichnet, dass**
(f) im Elektrolyteinströmbereich eine grobmaschige Stützstruktur (11) vorgesehen ist, wobei
(g) die grobmaschige Stützstruktur einen geringeren Strömungswiderstand bietet, als die poröse Elektrode (3a, 3b).

2. Elektrochemische Zelle nach Anspruch 1, **dadurch gekennzeichnet, dass** der Elektrolyteinströmbereich (10) zwischen der permeablen Trennschicht (4) und der porösen Elektrode und der Elektrolytausströmbereich (14) zwischen der porösen Elektrode und den Seitenelementen (7) angeordnet ist oder umgekehrt.

3. Elektrochemische Zelle nach den Ansprüchen 1 und/oder 2 **dadurch gekennzeichnet, dass** der Elektrolyteinströmbereich (10) und/oder der Elektrolytausströmbereich (14) in die porösen Elektroden (3a, 3b) und/oder die Seitenelementen (7) mittels eines oder mehreren Strömungskanälen (17) integriert ist.

4. Elektrochemische Zelle nach mindestens einem der vorstehenden Ansprüche 1 bis 3, **dadurch gekennzeichnet, dass** im Elektrolytausströmbereich (14) eine grobmaschige Stützstruktur (11) vorgesehen ist.

5. Elektrochemische Zelle nach Anspruch 1 oder 4, **dadurch gekennzeichnet, dass** die grobmaschige Stützstruktur (11) ein Gewebe oder ein Gestrick ist.

6. Elektrochemische Zelle nach mindestens einem der Ansprüche 1, 4 und 5, **dadurch gekennzeichnet, dass** die grobmaschige Stützstruktur (11) aus einem elektrisch leitenden Material oder einem Material mit elektrisch leitfähiger Beschichtung hergestellt ist

7. Elektrochemische Zelle nach mindestens einem der Ansprüche 1 und 4 bis 6, **dadurch gekennzeichnet, dass** die grobmaschige Stützstruktur (11) eine Kohlenstoffstützstruktur darstellt.

8. Elektrochemische Zelle nach mindestens nach einem Ansprüche 1 bis 7, **dadurch gekennzeichnet, dass** es sich bei der porösen Elektrode (3a, 3b) um ein Kohlenstoffvlies, um Schäume oder um Metallschäume handelt.

9. Zellenstapel einer elektrolytischen Zelle vom Durchflusstyp nach Anspruch 1.

## Claims

1. Electrochemical cell (2) of the flow type, comprising

   (a) an anode half-cell and a cathode half-cell, which are bounded by side elements (7), wherein the respective porous electrodes (3a, 3b) are comprised in the half-cells, and also
   (b) a permeable separating layer (4) which is disposed between the anode half-cell and the cathode half-cell,
   (c) an electrolyte inflow region (10) connected to an electrolyte feed (13a, 13b), and an electrolyte outflow region (14) connected to an electrolyte drain (16), are provided, wherein
   (d) electrolyte inflow region and electrolyte outflow region are disposed on opposite sides of the porous electrode, such that
   (e) inflowing electrolyte flows through the porous electrode perpendicularly to the permeable separating layer (4),
   **characterized in that**
   (f) in the electrolyte inflow region there is provided a wide-mesh support structure (11), wherein
   (g) the wide-mesh support structure presents a lower flow resistance than the porous electrode (3a, 3b).

2. Electrochemical cell according to Claim 1, **characterized in that** the electrolyte inflow region (10) is disposed between the permeable separating layer (4) and the porous electrode, and the electrolyte outflow region (14) is disposed between the porous electrode and the side elements (7), or vice versa.

3. Electrochemical cell according to Claims 1 and/or 2, **characterized in that** the electrolyte inflow region (10) and/or the electrolyte outflow region (14) is integrated into the porous electrodes (3a, 3b) and/or into the side elements (7) by means of one or more flow channels (17).

4. Electrochemical cell according to at least one of the preceding Claims 1 to 3, **characterized in that** in the electrolyte outflow region (14) there is provided a wide-mesh support structure (11).

5. Electrochemical cell according to Claim 1 or 4, **characterized in that** the wide-mesh support structure (11) is a woven fabric or a knitted fabric.

6. Electrochemical cell according to at least one of Claims 1, 4 and 5, **characterized in that** the wide-mesh support

structure (11) is made of an electrically conducting material or of a material with electrically conductive coating.

**7.** Electrochemical cell according to at least one of Claims 1 and 4 to 6, **characterized in that** the wide-mesh support structure (11) represents a carbon support structure.

**8.** Electrochemical cell according to at least according to any of Claims 1 to 7, **characterized in that** the porous electrode (3a, 3b) is constituted by a nonwoven carbon web, by foams, or by metal foams.

**9.** Cell stack of an electrolytic cell of the flow type according to Claim 1.

## Revendications

**1.** Cellule électrochimique du type à circulation (2), comprenant

(a) une demi-cellule anodique et une demi-cellule cathodique délimitées par des éléments latéraux (7), dans laquelle les demi-cellules contiennent les électrodes poreuses respectives (3a, 3b), ainsi que
(b) une couche de séparation perméable (4) disposée entre les demi-cellules anodique et cathodique,
(c) une zone d'entrée d'électrolyte (10) reliée à une arrivée d'électrolyte (13a, 13b) et une zone de sortie d'électrolyte (14) reliée à une évacuation d'électrolyte (16), dans laquelle
(d) la zone d'entrée d'électrolyte et la zone de sortie d'électrolyte sont disposées sur des côtés opposés de l'électrode poreuse de manière à ce que
(e) l'électrolyte entrant traverse l'électrode poreuse perpendiculairement à la couche de séparation perméable (4),
**caractérisée en ce que**
(f) il est prévu dans la zone d'entrée d'électrolyte une structure de support à mailles grossières (11), dans laquelle
(g) la structure de support à mailles grossières offre une résistance à l'écoulement inférieure à celle de l'électrode poreuse (3a, 3b).

**2.** Cellule électrochimique selon la revendication 1, **caractérisée en ce que** la zone d'entrée d'électrolyte (10) est située entre la couche de séparation perméable (4) et l'électrode poreuse et **en ce que** la zone de sortie d'électrolyte (14) est située entre l'électrode poreuse et les éléments latéraux (7), ou inversement.

**3.** Cellule électrochimique selon les revendications 1 et/ou 2, **caractérisée en ce que** la zone d'entrée d'électrolyte (10) et/ou la zone de sortie d'électrolyte (14) est/sont intégrée(s) dans les électrodes poreuses (3a, 3b) et/ou les éléments latéraux (7) au moyen d'un ou de plusieurs canaux d'écoulement (17).

**4.** Cellule électrochimique selon au moins l'une des revendications 1 à 3 précédentes, **caractérisée en ce qu'**il est prévu une structure de support à mailles grossières (11) dans la zone de sortie d'électrolyte (14) .

**5.** Cellule électrochimique selon la revendication 1 ou 4, **caractérisée en ce que** la structure de support à mailles grossières (11) est un tissu ou un tricot.

**6.** Cellule électrochimique selon au moins l'une des revendications 1, 4 et 5, **caractérisée en ce que** la structure de support à mailles grossières (11) est constituée d'un matériau électriquement conducteur ou d'un matériau muni d'un revêtement électriquement conducteur.

**7.** Cellule électrochimique selon au moins l'une des revendications 1 et 4 à 6, **caractérisée en ce que** la structure de support à mailles grossières (11) est une structure de support en carbone.

**8.** Cellule électrochimique selon au moins selon l'une des revendications 1 à 7, **caractérisée en ce que** l'électrode poreuse (3a, 3b) est constituée par une nappe de carbone, par des mousses ou par des mousses métalliques.

**9.** Pile de cellules d'une cellule électrolytique du type à circulation selon la revendication 1.

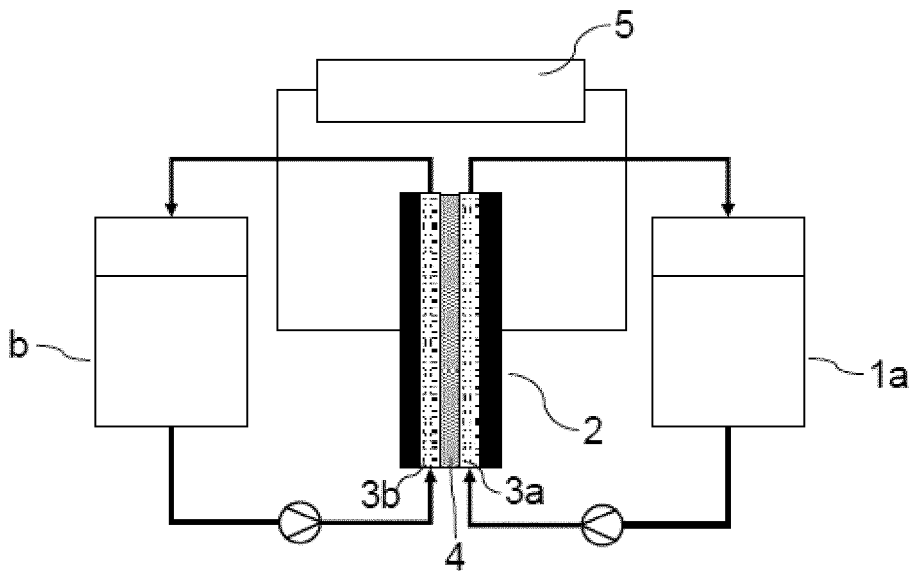


Abbildung 1

Fig. 2

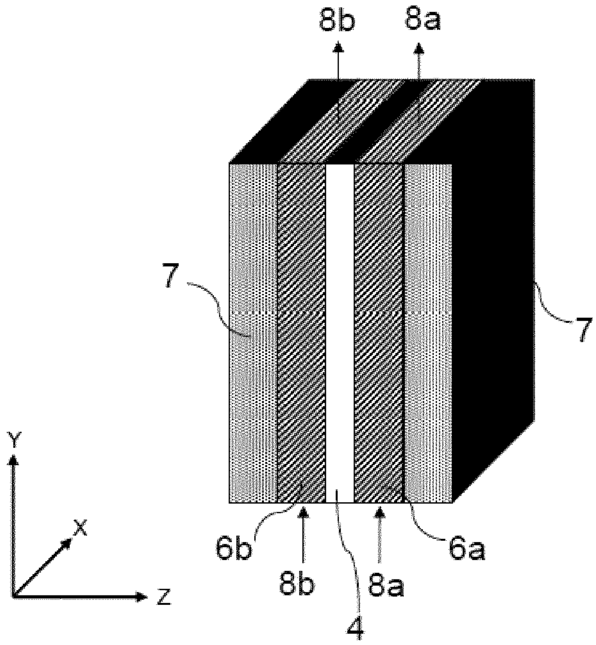


Abbildung 2

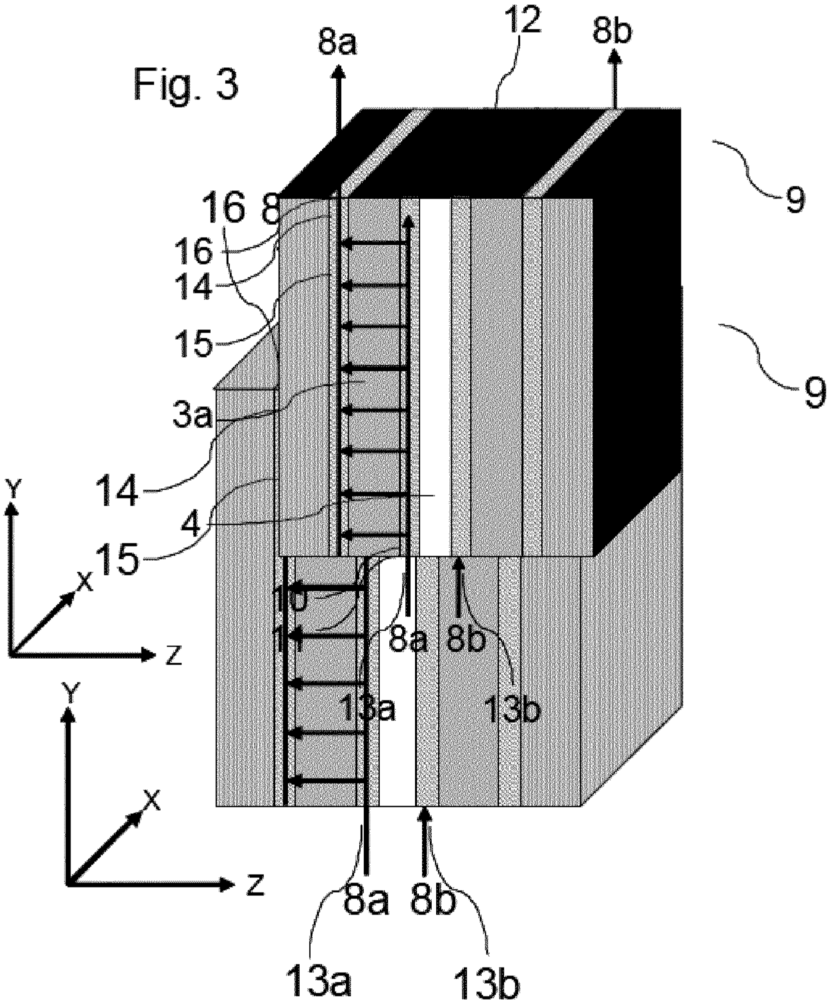
Fig. 3
8a
12
8b
9
9
16 8
16
14
15
3a
14
4
15
10
11
8a
8b
13a
13b
8a
8b
13a
13b
Y
X
Z
Y
X
Z

Abbildung 3

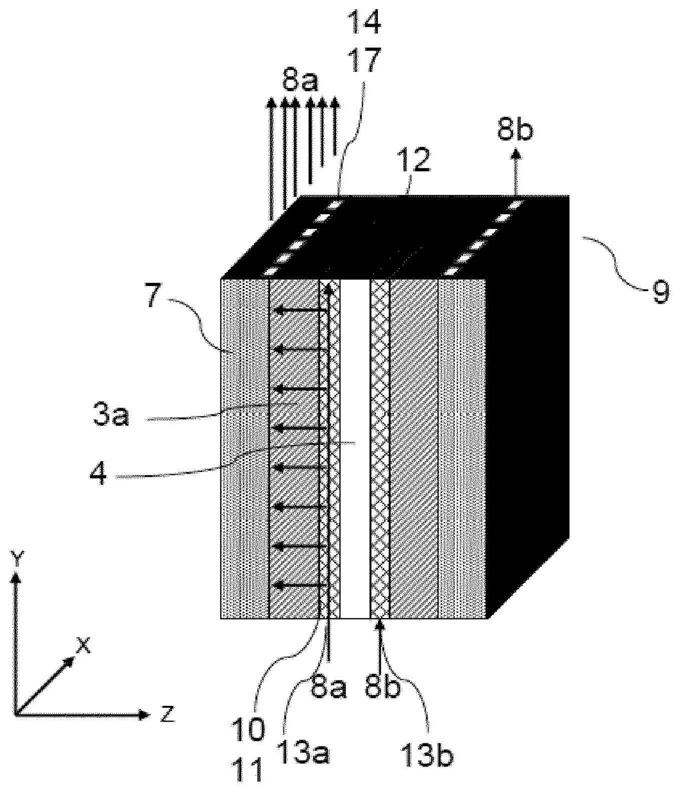


**Abbildung 4**

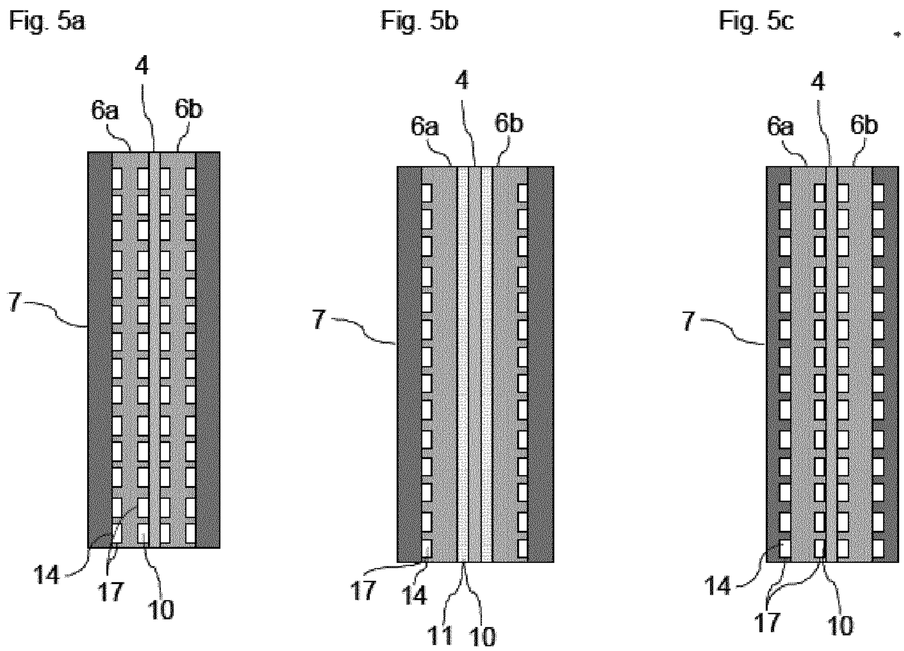


**Abbildungen 5a, 5b und 5c**

Fig. 6a

Fig. 6b

Fig. 6c

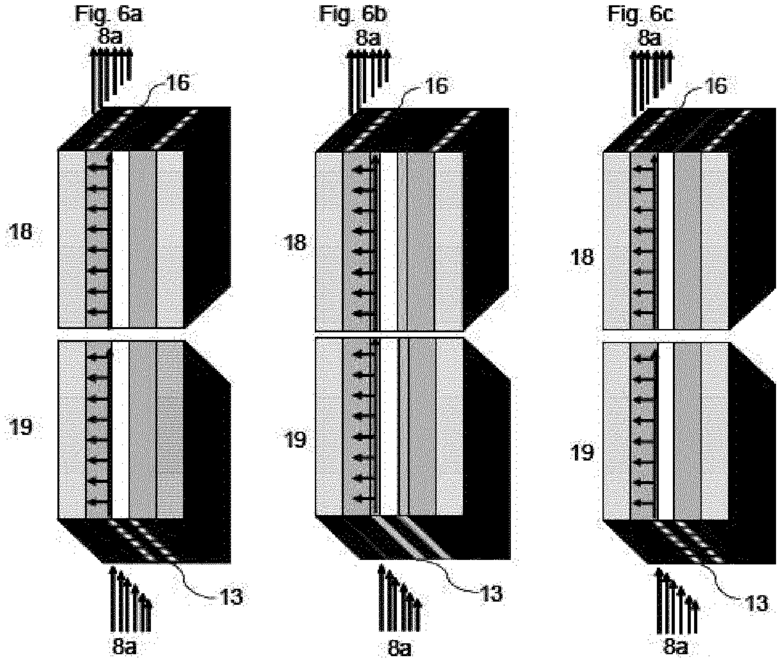


**Abbildungen 6a, 6b und 6c**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2012022532 A1
- EP 0814527 A2
- US 5648184 A
- US 6475661 B1
- DE 3401638 A1
- US 4049880 A
- DE 19641125 A1
- EP 0095039 A1

### In der Beschreibung aufgeführte Nicht-Patentliteratur

- *J. Power Sour.,* 2012, vol. 206, 450-453
- *Rare Metals,* Marz 2012, vol. 30, 16-21